# EUROPÄISCHE PATENTSCHRIFT

(11) **EP 2 119 840 B1**
(45) Veröffentlichungstag und Bekanntmachung des Hinweises auf die Patenterteilung: **16.07.2014**
(21) Anmeldenummer: 09006599.6
(22) Anmeldetag: 15.05.2009
(51) Int. Cl.: E04B 1/80

(54) **Vakuumdämmelement**
Vacuum insulation element
Elément isolant sous vide

(30) Priorität: 16.05.2008 DE 102008023870
(43) Veröffentlichungstag der Anmeldung: 18.11.2009
(73) Patentinhaber: SAINT-GOBAIN ISOVER G+H AG, 67059 Ludwigshafen (DE)
(72) Erfinder: Meier, Ulrich, Dr., 76131 Karlsruhe (DE); Schumm, Michael, Dr., 69198 Schriesheim (DE)
(74) Vertreter: Bockhorni & Kollegen

(56) Entgegenhaltungen:
- EP-A2- 1 762 662
- WO-A1-2005/080738
- DE-A1- 4 214 002
- DE-A1- 4 339 435
- DE-T5-112005 002 831

## Beschreibung

Die Erfindung betrifft ein Dämmelement gemäß dem Oberbegriff des Patentanspruches 1. Derartige Dämmelemente weisen eine Hülle auf, welche eine Füllkammer bildet. Die Hülle ist vakuumdicht versiegelt. In der Hülle ist ein isolierendes Füllmaterial eingebettet.

Als Gebäudedämmung werden vorzugsweise Dämmelemente aus Mineralwolle oder Schäumen verwendet. Die Dämmwirkung dieser Dämmelemente hängt unter anderem von der in ihnen eingeschlossenen Luft oder Treibgasen ab. Wärmedämmelemente aus Mineralwolle sind üblicherweise aus Glas- oder Steinwollfasern gebildet, die mit Bindemitteln, insbesondere Phenolformaldehydharz, versehen sind, wobei der Bindemittelgehalt je nach Anwendung zwischen 2 und 7 Gewichtsprozent variieren kann.

Um zu einer erheblichen Verbesserung des Wärmedämmvermögens von Dämmelementen im Baubereich zu kommen, werden teil- oder vollständig evakuierte Dämmelemente eingesetzt. Jedoch haben sich diese Dämmelemente bislang nicht durchgesetzt. Gründe hierfür sind vor allem die hohen Anforderungen an die Handhabbarkeit und Belastbarkeit vor und während der Montage unter baustellenüblichen Bedingungen, sowie die Anforderungen an die Aufrechterhaltung des Ausgangsinnendrucks, in der Regel ein Vakuum, über übliche Sanierungszyklen oder Standzeiten von Gebäuden, beispielsweise über 30 Jahre.

Hingegen haben sich Vakuumisolierpaneele im Kühlgerätebau etabliert und werden dort als Dämmelemente vornehmlich in Kühlgerätewänden und Türen verwendet. Entscheidend hierfür ist, dass die aufgeführten die Anwendung derartiger Dämmelemente im Baubereich verhindernden Probleme hier von untergeordneter Bedeutung sind. Hauptanwendungsgebiete sind hierbei Kühlschränke und Kühltheken, wie sie beispielsweise in Supermärkten verwendet werden.

Generell sind diese Vakuumisolierpaneele aus einer Umhüllung aufgebaut, die einen Innenraum luftundurchlässig nach Außen abschließt, wobei jedoch geringe Diffusionsströme durch die Umhüllung bisher unvermeidbar sind. Aus diesen Diffusionsströmen resultiert ein Druckanstieg im Innenraum, der zu einem erheblichen Verlust des Wärmedämmvermögens führen kann. Üblicherweise ist der Innenraum mit einem Füllmaterial gefüllt, welches neben der mechanischen Abstützung gegen den Umgebungsdruck eine Minimierung der Wärmeübertragung durch Strahlung und durch Leitung des Füllmaterials selbst bewirkt. Um die für die Dämmwirkung entscheidende Aufrechterhaltung des Innendrucks über einen für die Anwendung erforderlichen Zeitraum zu gewährleisten, sind verschiedene Maßnahmen bekannt, bei kürzeren Zeiträumen insbesondere die Verwendung von Gettern, bei längeren Zeiträumen die regelmäßige Wiederherstellung des Vakuum durch Pumpsysteme. Ferner sind zum Erhöhen der Formstabilität des Dämmelements Stützsysteme bekannt. Die Stützsysteme können beispielsweise in Form von Waben oder Stützsäulen ausgebildet sein.

Aus der WO 2005/080738 A1 ist eine hochwärmedämmende Isolierglasscheibenverglasung bekannt (WO 2005/080738 A1), bei der zwischen den transparenten oder transluzenten Glasscheiben bei denen entsprechend des Verwendungszwecks ein transparenter transluzenter Füllstoff aus lichtdurchlässiger, pyrogener Kieselsäure verwendet wird. Bei einem Vakuumdämmelement für die Gebäudedämmung (DE 43 39 435 A1) wird ein faserhaltiger Füllstoff zwischen zwei Glasplatten verwendet, welcher unter Vakuum gesetzt werden kann, wobei die Glasplatten mit einem Randverbund verbunden sind, wie er für Isolierglasscheiben üblich ist.

Schließlich sind aus der DE 42 14 002 A1 Wärmedämmformkörper zur Wärmeisolierung bekannt, die aus einer evakuierbaren Umhüllung gebildet sind, die mit einem festen, mikroporösen Wärmedämmstoff befüllt ist, welcher aus druckfesten feinfaserigen Mikroglasfasern gebildet ist, die verpresst sind und bindemittelfrei vorliegen.

Um das für den Einsatz solcher Vakuumisolierpaneele im Baubereich bedeutsame Problem der mechanischen Belastbarkeit, insbesondere der Hülle gegen scharfkantige Einwirkungen, zu lösen, ist die Verwendung von metallischen Hüllmaterialien, etwa aus Edelstahl bekannt. Zwar können damit vakuumdicht geschlossene Umhüllungen geschaffen werden, die aber den Nachteil einer erhöhten Wärmeleitung über die die beiden Hauptflächen verbindenden Metallstege haben, was zu einer erheblichen Minderung der Dämmwirkung führt. Zur Verminderung dieses Effekts sind verschiedene Maßnahmen vorgeschlagen worden. So beschreibt die DE 198 03 908 A1 eine wärmetechnische Trennung der U-profilförmigen Stege von den Deckseiten durch einen dazwischen angebrachten dünnwandigen ringsumlaufenden Streifen aus wärmeisolierendem druckfesten Material. Eine völlige wärmetechnische Trennung der Stege von den Deckschichten ist gleichwohl nicht möglich, da zur vakuumdichten Verbindung diese miteinander verschweißt werden. Darüber hinaus ist das vorgeschlagene Dämmelement in der Herstellung vergleichsweise aufwendig und auch wegen der Verwendung von Edelstahl vergleichsweise teuer.

Aufgabe der Erfindung ist es, ein Vakuumdämmelement für die Gebäudedämmung zu schaffen, welches sich durch ein hohes Wärmedämmvermögen über Jahrzehnte lange Einsatzzeiten und entsprechende Stabilität auszeichnet.

Die Aufgabe wird gelöst durch die Merkmale der unabhängigen Ansprüche. Vorteilhafte Ausgestaltungen sind in den Unteransprüchen angegeben.

Die Erfindung stellt eine Abwendung von der bisherigen klassischen Wärmedämmung von Gebäuden dar und greift den Gedanken der Wärmedämmung mit Vakuumdämmelementen auf. Nach Maßgabe der Erfindung wird ein Dämmelement für die Gebäudedämmung geschaffen, bei dem eine Füllkammer verwendet wird, die unter Vakuum gesetzt wird. Die Füllkammer ist mit einem Füllmaterial gefüllt, welches eine ausreichende Stabilisierung der die Füllkammer umgebenden Hülle bewerkstelligt. Die Hülle ist durch zwei Deckschichten gebildet, die zugleich die beiden Hauptflächen der Füllkammer sind, und die miteinander über einen Randverbund gasdicht verbunden sind. Diese beiden Deckschichten bestehen aus Glas, insbesondere Glasscheiben. Dieser Aufbau wird im Folgenden als Glashülle bezeichnet. Der Randverbund kann auch aus Glas bestehen, so dass insgesamt ein Glaskasten gebildet ist. Die Glashülle oder der Glaskasten ist für eine lange Zeitdauer, bis zu 100 Jahren, hinreichend gasdicht, was eine optimale Wärmedämmung über diese gesamte Zeitdauer gewährleistet. Ferner lassen sich die Dämmelemente kostengünstig und in einfacher Weise herstellen. Dies stellt für Gebäudedämmelemente einen maßgeblichen Faktor dar, weil es sich hier um Massenprodukte handelt, und damit um Produkte, die auf dem Markt preiswert präsentiert werden müssen. Mit den erfindungsgemäßen Maßnahmen wird dabei auch eine sehr gute Wärmedämmung erreicht, wobei mindestens Lambda-Werte der Wärmeleitgruppe 010 in Analogie zur DIN V 18165-1:2002-01 erreicht werden können. Das erfindungsgemäße Dämmelement weist somit eine absolut luftundurchlässige Hülle auf, die eine hemmende Wirkung gegen das Hineindiffundieren von Luft in die Füllkammer aufweist. Damit erhöht sich insbesondere die Zeitdauer für einen signifikanten An-stieg des Innendrucks in der Füllkammer, was gleichbedeutend mit einer wesentlich verlängerten Nutzungsdauer des erfindungsgemäßen Dämmelements ist.

Die Glasscheiben weisen vorzugsweise eine Dicke zwischen 3 und 10 mm auf. Zur Herstellung der Glashülle oder des Glaskastens können sehr stabile Formteile verwendet werden, die eine hohe Steifigkeit, Stabilität und Widerstandsfestigkeit gegen mechanische Beanspruchung gewährleisten.

In besonders zweckmäßiger Weise zeichnet sich als Füllmaterial für das Dämmelement die Verwendung von Mineralwolle aus, die bevorzugt perlenfrei und aus feinen Fasern gebildet ist, so dass sich eine feine Faserstruktur ergibt, was überraschenderweise Vorteile in Bezug auf die Realisierung der Stützfunktion durch das Füllmaterial bringt. Die feinen Fasern weisen dabei ein Maximum der Durchmesserverteilung zwischen etwa 2 und etwa 4 µm auf. Das Maximum der Durchmesserverteilung ist dabei definiert als der Hochpunkt der Verteilungskurve.

Die Mineralwolle ist vorzugsweise bindemittelfrei, wodurch ein Ausgasen des Bindemittels vermieden wird, welches zu einem Druckanstieg in der Füllkammer führen würde. Ferner ist die Mineralwolle vorzugsweise zu einer Rohdichte von ≥ 150 kg/m³ verpresst. Die Mineralwolle trägt zur Erhöhung der Stabilität bei und führt zu einer insgesamt preiswerten Herstellung eines solchen Dämmelements.

Als Mineralwolle eignet sich insbesondere Glaswolle, Steinwolle. oder dergleichen.

In vorteilhafter Weise ist der Druck in der Hülle ≤ 0,3 mbar, vorzugsweise ≤ 0,1 mbar, eingestellt.

Eine Fassadenoptik eines Gebäudes, das mit dem Dämmelement isoliert ist, kann durch den Glaskasten günstig beeinflusst und/oder bestimmt werden, indem eine bei bestimmungsgemäßem Gebrauch des Dämmelements nach außen weisende Hauptfläche des Glaskastens entsprechend der gewünschten Fassadenoptik beschichtet ist, insbesondere bei einer vorgehängten Fassade.

Zum Schutz der Hülle kann diese mit einem weiteren Körper gekoppelt sein. Geeignet dafür sind insbesondere Dämmelemente aus Mineralwolle oder Schäumen, mit denen zugleich ein Sandwich-Dämmelement realisiert ist, also ein Dämmelement, das mehrere Schichten aus unterschiedlichen Komponenten aufweist. Insbesondere kann das Dämmelement in einem Isolierkörper aus diesen Materialien eingebettet sein. Der Körper kann alternativ dazu auch aus einem anderen stabilisierenden und/oder schützenden Material gebildet sein.

In einer weiteren vorteilhaften Ausgestaltung ist das Dämmelement plattenförmig ausgebildet. Dies ermöglicht in einfacher Weise das Dämmen großer Flächen. Dazu können beispielsweise die einzelnen plattenförmigen Dämmelemente Stoß an Stoß mit flachen Seiten aneinander gelegt werden. Alternativ dazu können an den Seiten der Dämmelemente Nuten und Federn vorgesehen sein, die bei einem Verlegen der Dämmelemente ineinander eingreifen.

Im Übrigen zeichnet sich die Erfindung durch ein einfaches Herstellungsverfahren aus, bei dem das isolierende Füllmaterial aus Mineralwolle bindemittelfrei bei hohen Temperaturen im Bereich von 350 bis 550°C verpresst wird. Dergestalt hergestellte verfestigte Füllkörper aus Mineralwolle werden dann zwischen die beiden Glasscheiben der Glashülle eingebracht oder mit dem Glaskasten verkleidet. Im Fall der Glashülle werden die beiden Scheiben anschließend auf geeignete Weise, etwa durch Verschweißen, Verkleben oder Heißschmelzen, ggf. unter Zugabe von Schweiß-, Kleb- oder Heißschmelzgut und ggf. gasdichter Stege, gasdicht miteinander verbunden. Im Fall des Glaskastens wird vorzugsweise ein Hüllenteil von oben und ein Hüllenteil von unten an den verpressten Füllkörper aufgebracht und randseitig des Füllkörpers zusammengeführt. Die Kontaktstellen zwischen dem oberen und dem unteren Hüllenteil werden dann miteinander vakuumdicht verbunden, was durch Schweißen, insbesondere Vakuumverschweißen, durch Kleben oder in sonst geeigneter Weise erfolgen kann. Zum Verschweißen der beiden Hüllenteile kann beispielsweise Bleikristallglas verwendet werden. Die Verbindung der beiden Hüllenteile ist vorzugsweise vakuumdicht, so dass die durch die Hülle eingeschlossene Füllkammer evakuiert werden kann und das Vakuum über eine lange Gebrauchsdauer aufrecht erhalten werden kann. Alternativ ist es auch möglich, das Dämmelement unter Vakuum herzustellen, so dass eine nachträgliche Evakuierung und Versiegelung der Absaugöffnung entfallen kann.

Zweckmäßige Ausführungsbeispiele der Erfindung sind im Folgenden anhand von schematischen Zeichnungen näher erläutert.

### Es zeigen:

- Fig. 1: einen Schnitt durch eine erste Ausführungsform eines Dämmelements;
- Fig. 2: einen Schnitt durch die erste Ausführungsform des Dämmelements mit einem Körper gekoppelt sowie
- Fig. 3: eine Darstellung eines Stoßbereichs benachbarter Dämmplatten.

Elemente gleicher Konstruktion oder Funktion sind hierbei figurenübergreifend mit den gleichen Bezugszeichen gekennzeichnet.

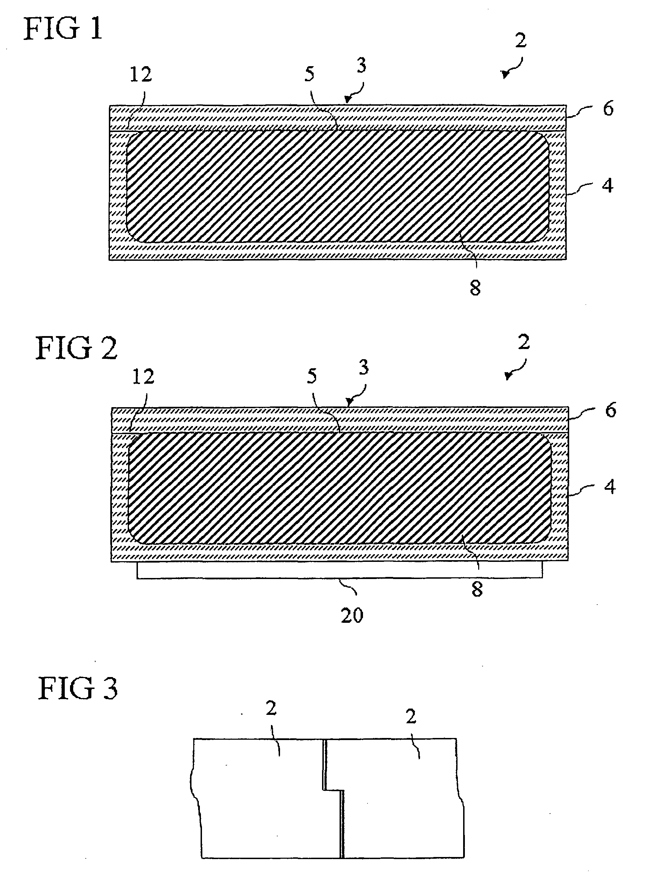

Ein Dämmelement 2 (Fig. 1) umfasst eine Hülle 3, die ein oberes Hüllenteil 6 und ein unteres Hüllenteil 4 umfasst. Das obere und das untere Hüllenteil 6, 4 bilden einen Glaskasten, der eine Füllkammer 5 bildet. Insbesondere ist das obere Hüllenteil 6 durch eine Glasscheibe gebildet. Das untere Hüllenteil 4 ist aus mehreren Glasscheiben oder einstückig als nach oben offener Glaskasten gebildet. In der Hülle 3 ist ein isolierendes Füllmaterial 8 eingebettet. Die Hülle 3 ist vakuumdicht versiegelt und kann dazu beispielsweise an einer Schweißnaht 12 zwischen dem oberen und dem unteren Hüllenteil 6, 4 vakuumdicht verschweißt sein.

Die Füllkammer 5 ist evakuiert. Das bedeutet in diesem Zusammenhang, dass ein Luftdruck in der Füllkammer 5 wesentlich kleiner als der Normaldruck ist. Beispielsweise ist der Druck im Inneren der Füllkammer 5 kleiner als 0,3 mbar. Der Druck kann jedoch auch kleiner oder gleich 0,1 mbar sein.

Das isolierende Füllmaterial 8 umfasst vorzugsweise Mineralwolle. Als Mineralwolle kann Glaswolle verwendet werden, die biolöslich und weitgehend perlenfrei ist sowie sich durch sehr feine Fasern auszeichnet. Alternativ kann das isolierende Füllmaterial 8 auch aus Steinwolle gebildet sein.

Die isolierenden Füllmaterialien besitzen Stützfunktion und verhindern, dass sich das Dämmelement 2 beim Evakuieren verformt, stattdessen vielmehr dimensionsstabil bleibt. Ferner tragen das Vakuum und das isolierende Füllmaterial 8 dazu bei, dass mit dem Dämmelement 2 eine besonders gute Wärmedämmung erzielt werden kann. Es lassen sich damit mindestens Lambda-Werte für die Wärmeleitgruppe 010 gemäß DIN-Norm in Analogie zur DIN V 18165-1:2002-01 erzielen. Der Faserverlauf der Mineralwolle in der Füllkammer 5 ist vorzugsweise parallel zu den Hauptflächen.

Die Mineralwolle, die unter erhöhter Temperatur zu einem stabilisierenden Formkörper verpresst wird, weist eine Rohdichte von mindestens 150 kg/m³ auf. Vorzugweise liegt die Mineralwolle in einer Rohdichte von mehr als 200, insbesondere mehr als 350 kg/m³ vor. Dies ermöglicht eine gute Dämmung bei einer hohen Formstabilität des Dämmelements 2.

Fig. 2 zeigt das Dämmelement 2, welches zum Schutz gegen Beschädigungen von außen auf einer der Hauptflächen mit einem weiteren Körper 20, hier beispielsweise in Form einer Holzplatte, versehen ist. Selbstverständlich kann ein zweiter Körper auf der gegenüberliegenden Hauptfläche angeordnet sein. Als Material für den Körper 20 kann alternativ auch Gummi, Sperrholz, Mineralwolle, eine Gipsplatte, Schaumstoff und/oder ein Verbundmaterial aus den genannten Materialien verwendet werden. Ferner kann das Dämmelement 2 in den Körper 20 aus zumindest einem der Materialien eingebetet sein. Der Körper 20 kann beispielsweise eine Dicke von 4 mm bis 25 mm aufweisen.

Insgesamt hat das Dämmelement 2 beispielsweise eine Breite zwischen 0,5 und 1,00 m und eine Länge zwischen 0,5 und 2 m. Vorzugsweise hat das Dämmelement 2 eine Bemaßung, die im Baugewerbe für Dämmplatten üblich ist, beispielsweise 0,625 m auf 1,25 m. Die Dicke des Dämmelements 2 liegt vorzugsweise zwischen 10 und 60 mm oder zusammen mit dem Körper 20 beispielsweise zwischen 30 und 100 mm, vorzugsweise zwischen 40 und 80 mm.

Die Glasscheiben der Hülle 3 weisen vorzugsweise eine Dicke zwischen 3 und 10 mm auf. Die Glasscheiben sind über eine lange Zeitdauer absolut gasdicht, beispielsweise über 100 Jahre. Ferner können zur Herstellung der Glashülle oder des Glaskastens sehr stabile Formteile verwendet werden, die eine hohe Steifigkeit, Stabilität und Widerstandsfestigkeit gegen mechanische Beanspruchung gewährleisten.

Eine Fassadenoptik eines Bauwerks, das mittels mehrerer Dämmelemente 2 gedämmt ist, wird einfach und günstig beeinflusst und/oder bestimmt, indem eine bei bestimmungsgemäßem Gebrauch des Dämmelements 2 nach außen weisende Hauptfläche des Glaskastens entsprechend beschichtet ist, insbesondere bei einer vorgehängten Fassade. Beispielsweise kann die Beschichtung eine vorgegeben Farbe oder Verspiegelung umfassen.

Eine ausreichende Stabilität des Füllmaterials 8 im Fall von Mineralwolle zum Zweck der Formstabilität des Dämmelements 2 gegen den darauf wirkenden Außendruck wird vorzugsweise dadurch erzielt, dass die Mineralwolle bindemittelfrei bei einer hohen Temperatur verpresst wird, beispielsweise bei 350° bis 550° Celsius. Im Falle von bindemittelfreier Mineralwolle kann dies in einer herkömmlichen Presse unter Verwendung zweier zusammenwirkender Formhälften erfolgen, die in einer offenen Struktur ausgelegt sind. Hierzu wird die Mineralwolle in die Form eingelegt, die dann unter Druck und unter erhöhter Temperatur geschlossen wird, um die Mineralwolle zur Bildung des Formkörpers zu verpressen. Hierbei wird im Falle der Mineralwolle durch den Pressvorgang unter erhöhten Temperaturen eine Stützstruktur ausgebildet, die die Formstabilität des Dämmelements 2 gewährleistet. Im Fall der Verwendung von verpresstem Pulver, insbesondere Kieselsäure, kann die Temperung entfallen.

Nach dem Verpressen der Mineralwolle wird diese nach Öffnen der Form aus dieser ausgehoben und es erfolgt eine Ummantelung des Formkörpers durch Aufbringen der Hülle 3. Hierbei ist es zweckmäßig, wenn im Fall des Glaskastens für die Hülle 3 das obere und das untere Hüllenteil 6, 4 verwendet werden. Der verpresste Formkörper wird hierbei auf ein Hüllenteil aufgelegt und das andere Hüllenteil wird von oben auf den Formkörper aufgebracht. Die beiden Hüllenteile werden dann im Bereich der Schmalseiten des Formkörpers zusammengeführt und miteinander verschweißt, verklebt oder in sonst einer geeigneten Weise vakuumdicht rundum geschlossen.

Figur 3 zeigt einen Stoßbereich zweier benachbarter Dämmelemente 2 in Art eines Stufenfalzes im Bereich der Stoßstelle, so dass sich eine gewisse Überlappung ergibt. Dadurch wird der Bildung von Wärmebrücken entgegengewirkt.

Zur Herstellung des Glaskastens als Hülle 3 werden mindestens zwei Glasscheiben miteinander verschweißt oder verklebt. Beispielsweise wird das obere Hüllenteil 6 mit einem Steg der Glasscheibe des nach oben offenen Kastens, der durch das untere Hüllenteil 4 gebildet ist, gasdicht und fest verbunden. Der Steg kann mit der Glasscheibe des nach oben offenen Kastens verschweißt, verklebt oder heißverschmolzen werden. Alternativ dazu kann der Steg integral mit der Glasscheibe des nach oben offenen Kastens hergestellt werden. Zum Verschweißen wird beispielsweise Bleikristallglas verwendet. Dabei treten Temperaturen von beispielsweise 600° Celsius auf.

Im bevorzugten Ausführungsbeispiel füllt der Füllkörper 8 vollständig den durch die Glashülle begrenzten Innenraum aus und liegt somit vollflächig an den Glasscheibeninnenflächen an. Dies ist für die Stabilität des Dämmelements von Vorteil, da ja der aus verpresster Mineralwolle gebildete Formkörper zur Stabilitätserhöhung beiträgt. Damit können auch bei großflächigen Abmessungen Abstandhalter entfallen. Auch die Eckenbereiche und Kantenbereiche sind vollausgefüllt. Dies ist auch deswegen von Vorteil, weil sich die Glasscheiben unter Vakuum ja auch im gewissen Sinne durchbiegen können und damit eine stabile Koppelung mit dem festen Formkörper des Füllkörpers gewährleistet ist. Dadurch ist es möglich, dass für die Glasscheiben einfaches Fensterglas verwendet werden kann, was auch aus wirtschaftlichen Gründen von Vorteil ist. Insgesamt ergibt sich eine sehr hohe Eigenstabilität des Dämmelements, so dass eine Beschädigung der Glasscheiben durch Bruch bei üblichen Beanspruchungen und zwar auch bei Schlag- und Stoßbeanspruchungen, Hagel u. dgl. äußeren Einflüssen nicht zu befürchten ist.

Zur Dicke des Füllkörpers ist es zweckmäßig, wenn diese 10-40 mm, vorzugsweise 15-25 insbesondere bevorzugt etwa 20 mm beträgt.

Die Erfindung ist nicht auf die angegebenen Ausführungsbeispiele beschränkt. Beispielsweise können die angegebenen Ausführungsbeispiele miteinander kombiniert werden. Beispielsweise kann als Füllmaterial 8 das gepresste Pulver vorgesehen sein und das Dämmelement 2 kann mit dem Körper 20 gekoppelt sein. Ferner können in der Hülle 3 zusätzlich zu dem isolierenden Füllmaterial 8 Getter vorgesehen sein, die zum Binden freier Gasteilchen innerhalb der Hülle 3 dienen. Als Gettermaterial eignet sich beispielsweise Aktivkohle oder Zeolithe.

## Patentansprüche

1. Vakuumdämmelement (2) für die Dämmung von Gebäuden, insbesondere Fassaden, Decken, Wänden und Dächern, mit einer Hülle (3), die vakuumdicht versiegelt ist und eine Füllkammer (5) bildet, die evakuiert ist, und in die ein isolierendes faserförmiges Füllmaterial (8) eingebettet ist, wobei die beiden Hauptflächen der Hülle (3) aus Glas, insbesondere Glasscheiben, gebildet sind, **dadurch gekennzeichnet, dass** das isolierende Füllmaterial der Füllkammer (5) aus Mineralwolle gebildet ist, wobei die Mineralwolle verpresst und bindemittelfrei ist sowie eine Rohdichte ≥ 150 kg/m³ aufweist.

2. Vakuumdämmelement (2) nach Anspruch 1, **dadurch gekennzeichnet, dass** der Randverbund der beiden Hauptflächen aus Glas, insbesondere Glasscheiben, besteht.

3. Vakuumdämmelement (2) nach Anspruch 1 oder 2, **dadurch gekennzeichnet, dass** die Glasscheiben eine Dicke zwischen 3 und 10 mm aufweisen.

4. Vakuumdämmelement (2) nach einem der vorhergehenden Ansprüche, **dadurch gekennzeichnet, dass** die Mineralwolle Glaswolle oder Steinwolle umfasst.

5. Vakuumdämmelement (2) nach Anspruch 1, **dadurch gekennzeichnet, dass** die Mineralwolle in der Hülle (3) eine Rohdichte von ≥ 200 kg/m³, vorzugsweise ≥ 350 kg/m³ aufweist.

6. Vakuumdämmelement (2) nach einem der Ansprüche 4 bis5, **dadurch gekennzeichnet, dass** die Mineralwolle im Wesentlichen perlenfrei vorliegt und/oder aus feinen Fasern mit einem Maximum der Durchmesserverteilung zwischen etwa 2 µm und 4 µm gebildet ist.

7. Vakuumdämmelement (2) nach einem der vorstehenden Ansprüche, **dadurch gekennzeichnet, dass** in der Hülle (3) ein Luftdruck kleiner oder gleich 0,3 mbar, bevorzugt kleiner oder gleich 0,1 mbar eingestellt ist.

8. Vakuumdämmelement (2) nach einem der vorhergehenden Ansprüche, **dadurch gekennzeichnet, dass** eine bei bestimmungsgemäßem Gebrauch des Dämmelements (2) nach außen weisende Hauptfläche des Glaskastens beschichtet ist.

9. Vakuumdämmelement (2) nach einem der vorstehenden Ansprüche, **dadurch gekennzeichnet, dass** die Hülle (3) zumindest einseitig fest mit einem gegen Beschädigung schützenden Körper (20) gekoppelt, insbesondere in den Körper (20) eingebettet, ist.

10. Vakuumdämmelement (2) nach einem der vorstehenden Ansprüche, **dadurch gekennzeichnet, dass** das Dämmelement (2) plattenförmig ausgebildet ist.

## Claims

1. A vacuum insulation element (2) for the insulation of buildings, in particular of facades, ceilings, walls and roofs, with a sleeve (3) which is vacuum-sealed and which forms a filling chamber (5) which is evacuated and which is embedded into an insulating fibrous filling material (8), with the two main surfaces of the sleeve (3) being made of glass, in particular of glass sheets, **characterized by** the fact that the insulating filling material of the filling chamber (5) is made of mineral wool, with the mineral wool being compressed and binder-less and having a raw density of ≥ 150 kg/m³.

2. The vacuum insulation element (2) according to claim 1, **characterized by** the fact that the edge bond of the two main surfaces consists of glass, in particular of glass sheets.

3. The vacuum insulation element (2) according to claim 1 or 2, **characterized by** the fact that the glass sheets have a thickness between 3 and 10 mm.

4. The vacuum insulation element (2) according to one of the preceding claims, **characterized by** the fact that the mineral wool comprises glass wool or rock wool.

5. The vacuum insulation element (2) according to claim 1, **characterized by** the fact that the mineral wool in the sleeve (3) has a raw density of ≥ 200 kg/m³, preferably ≥ 350 kg/m³.

6. The vacuum insulation element (2) according to one of claims 4 to 5, **characterized by** the fact that the mineral wool is basically free of pearls and/or formed of fine fibres with a maximum of the diameter distribution between approx. 2 µm and 4 µm.

7. The vacuum insulation element (2) according to one of the preceding claims, **characterized by** the fact that an air pressure in the sleeve (3) is adjusted to less or equal 0.3 mbar, preferably less or equal 0.1 mbar.

8. The vacuum insulation element (2) according to one of the preceding claims, **characterized by** the fact that with the designated use of the insulation element (2), an outward facing main area of the glass case is coated.

9. The vacuum insulation element (2) according to one of the preceding claims, **characterized by** the fact that the sleeve (3) is at least at one side firmly coupled with a body (20) that protects against damages, in particular embedded into the body (20).

10. The vacuum insulation element (2) according to one of the preceding claims, **characterized by** the fact that the insulation element (2) is plate-shaped.

## Revendications

1. Elément d'isolation à vide (2) pour l'isolation de bâtiments, en particulier de façades, de plafonds, de murs et de toits, ledit élément comportant une enveloppe (3) qui est scellée de manière étanche au vide et une chambre de remplissage (5) qui est mise sous vide et dans laquelle est incorporé un matériau de remplissage fibreux isolant (8), les deux surfaces principales de l'enveloppe (3) étant réalisées à partir de verre, notamment de plaques de verre, **caractérisé en ce que** le matériau de remplissage isolant de la chambre de remplissage (5) est réalisé à partir de laine minérale, la laine minérale étant comprimée et exempte de liant et a une masse volumique apparente ≥ 150 kg/m³.

2. Elément d'isolation à vide selon la revendication 1, **caractérisé en ce que** le joint de bordure des deux surfaces principales est réalisé à partir de verre, notamment de plaques de verre.

3. Elément d'isolation à vide (2) selon la revendication 1 ou 2, **caractérisé en ce que** les plaques de verre ont une épaisseur comprise entre 3 et 10 mm.

4. Elément d'isolation à vide selon l'une quelconque des revendications précédentes, **caractérisé en ce que** la laine minérale comprend la laine de verre ou la laine de roche.

5. Elément d'isolation à vide (2) selon la revendication 1, **caractérisé en ce que** la laine minérale dans l'enveloppe (3) a une masse volumique apparente ≥ 200 kg/m³, de préférence ≥ 350 kg/m³.

6. Elément d'isolation à vide (2) selon l'une quelconque des revendications 4 à 5, **caractérisé en ce que** la laine minérale est sensiblement exempte de bulles et/ou est formée de fines fibres dont la distribution maximale des diamètres est comprise entre environ 2 µm et 4 µm.

7. Elément d'isolation à vide (2) selon l'une quelconque des revendications précédentes, **caractérisé en ce que** la pression de l'air dans l'enveloppe (3) est réglée pour être inférieure ou égale à 0,3 mbar, de préférence inférieure ou égale à 0,1 mbar.

8. Elément d'isolation à vide (2) selon l'une quelconque des revendications précédentes, **caractérisé en ce qu'**une surface principale de la boîte de verre, laquelle surface est dirigée vers l'extérieur dans des conditions normales d'utilisation de l'élément isolant (2), est dotée d'un revêtement.

9. Elément d'isolation à vide (2) selon l'une quelconque des revendications précédentes, **caractérisé en ce que** l'enveloppe (3) est couplée au moins sur un côté de façon fixe à un corps (20) qui assure une protection contre tout endommagement, notamment elle est intégrée dans le corps (20).

10. Elément d'isolation à vide (2) selon l'une quelconque des revendications précédentes, **caractérisé en ce que** l'élément d'isolation (2) se présente sous la forme d'une plaque.
